# EUROPEAN PATENT APPLICATION

(11) **EP 1 103 838 A2**
(43) Date of publication of application: **30.05.2001**
(21) Application number: 00310410.6
(22) Date of filing: 23.11.2000
(51) Int. Cl.: G02F 1/09, G02B 6/26

(54) **Method and device for mixing light in a polarization dependent manner**

(30) Priority: 26.11.1999 CA 2290730
(71) Applicant: JDS Uniphase Inc., Nepean, Ontario K2G 5W8 (CA)
(72) Inventor: Ducellier, Thomas, Ottawa, Ontario, K1N 6B9 (CA); Cheng, Yihao, Nepean, Ontario, K2G 4P9 (CA)
(74) Representative: McKechnie, Neil Henry

(57) **Abstract**

This invention relates to optical devices that use the state of polarization (SOP) of the orthogonally polarized sub-beams of a composite optical signal to select pathways through a set of birefringent components. The SOP of the sub-beams is changed to affect the resulting path through the birefringent components and in this manner the sub-beams can be separated, mixed with other sub-beams and or recombined with the original sub-beams to form new signals at different locations (ports) of the optical devices presented. The use of the basic system to built more complicated systems results in a closed four port optical circulator based on birefringent crystals. The basic system is also used to construct an optical switch and an optical add/drop switch based on birefringent crystals.

## Description

The present invention relates to optical devices, and in particular to optical devices that use the state of polarization (SOP) of the sub-beams of a composite beam of light to determine the path taken by the light through a set of birefringent crystals.

### Background of the Invention

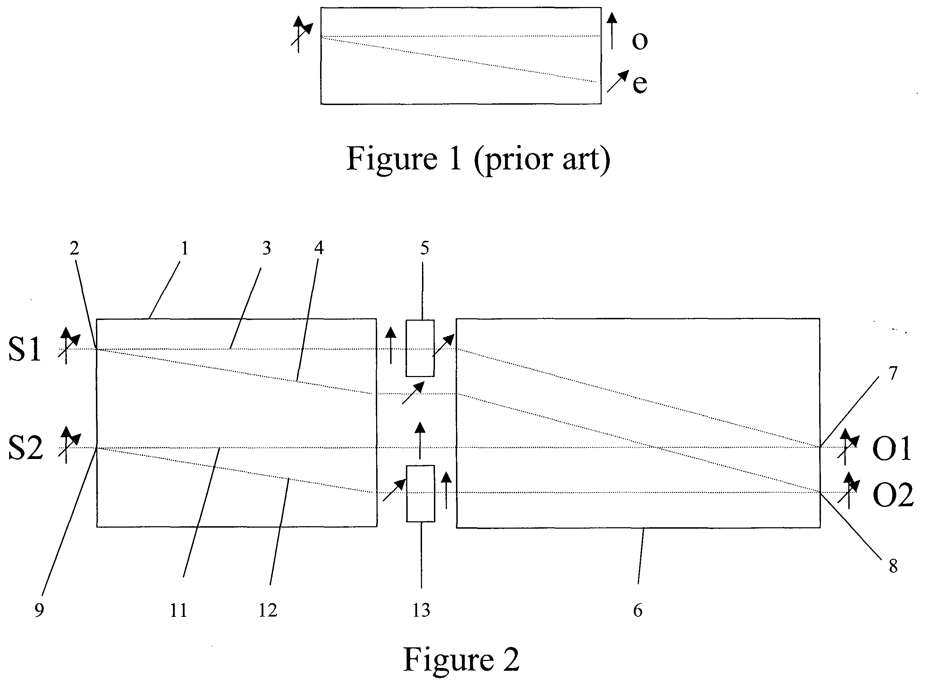

Optical circulators and switches are used to control optical signals on communication fibers. Multiple signals are placed on a single fiber in order to increase the amount of data that can be sent down such fibers. Polarization dependent optical circulators and switches have been taught in U.S. Patents Nos. 5,923,472 issued to Bergmann on July 13, 1999; 5,930,039 issued to Li et al on July 27, 1999; and 5,204,771 issued to Koga on April 20, 1993 (previously published in The Journal of Lightwave Technology, Vol. 10, pp. 1210-1216, 1992). Referring to Figure 1, all such systems are based on the ability of a birefringent crystal (calcite, rutile, etc.) to cause a spatial displacement, with respect to the optical axis of the crystal, of the e (extraordinary) polarized sub-beam of light as it travels through the crystal. The o (ordinary) polarized sub-beam of light travels through the crystal with no spatial displacement. The spatial displacement (walk-off) that an e sub-beam is subjected to depends upon the composition of the birefringent crystal, the crystallographic orientation of the birefringent crystal, and the size of the crystal available to the e sub-beam, i.e. the length. Further these systems are based on properties that are specific to the composition of the birefringent material used to make the crystal and the limitations the composition imposes, as well as the chosen optical axes direction of walk-off for the e sub-beam. However, the devices disclosed in Li et al and Bergmann are relatively complicated and limited to 3-port circulators. While the Koga reference discloses a 4-port circulator, this device requires relatively large birefringent crystals, which greatly increase the cost of the device. None of the prior art references discloses overlapping the paths of sub-beams of input composite beams, enabling the sub-beams of one composite beam mix with the sub-beams of another composite beam. This particular arrangement enables much smaller devices to be constructed, which has many advantages, not the least of which is cost.

### Summary of the Invention

An object of the present invention is to overcome the shortcomings of the prior art by providing a compact optical device for mixing the polarized sub-beams of input composite beams, which can also be used in a variety of other optical devices.

Accordingly the present invention relates to a method of mixing two beams of light comprising the steps of:
a) receiving a first composite beam, having a first polarization component and an orthogonal second polarization component, at a first location;
b) separating the first and second polarization components of the first beam;
c) rotating the first polarization or the orthogonal second polarization component of the composite first beam to provide two first sub-beams having a same polarization;
d) receiving a second composite beam, having a first polarization component and an orthogonal second polarization component, at a second location;
e) separating the first and second polarization components of the second composite beam;
f) rotating the first or the second polarization component of the second composite beam to provide two second sub-beams having a same polarization direction oriented orthogonally to the two first sub-beams;
g) mixing one of the two first sub-beams with one of the two second sub-beams to provide a first mixed sub-beam at a third location; and
h) mixing the other of the two first sub-beams with the other of the two second sub-beams to provide a second mixed sub-beam at a fourth location.

A further aspect of this invention is to a polarization dependent optical signal mixing device comprising:
first input means for receiving a first composite beam having a first polarization component and an orthogonal second polarization component;
first splitting means for separating the first and second polarization components of the first composite beam;
first polarization rotating means for rotating the first or the second polarization component of the first composite beam to provide two first sub-beams having a same polarization;
second input means for receiving a second composite beam having a first polarization component and an orthogonal second polarization component;
second splitting means for separating the first and second polarization components of the second composite beam;
second polarization rotating means for rotating the first or the second polarization component of the second composite beam to provide two second sub-beams having a same polarization, which is orthogonal to the polarization of the first sub-beams;
first mixing means for mixing one of the first sub-beams with one of the second sub-beams to provide a first mixed beam at a third location; and
second mixing means for mixing the other of the first sub-beams with the other of the second sub-beams to provide a second mixed beam at a fourth location.

Another embodiment of this invention relates to an optical circulator device comprising:
a first port for inputting a first composite beam having a first polarization component and an orthogonal second polarization component, and for outputting a fourth composite beam having a first polarization component and an orthogonal second polarization component, input from a fourth port;
a third port for inputting a third composite beam having a first polarization component and an orthogonal second polarization component, and for outputting a second composite beam having a first polarization component and an orthogonal second polarization component, input from a second port;
first mixing means for mixing one of the components of the first composite beam with one of the components of the third composite beam forming a first mixed beam, for mixing the other of the components of the first composite beam with the other of the components of the third composite beam forming a third mixed beam, and for recombining the components of the second and fourth composite beams from second and fourth mixed beams for output at the third and first ports, respectively;
non-reciprocal rotating means for making the components of the second and fourth mixed beams entering therein orthogonal to those passing therethrough, while unaffecting the polarity of the components of the first and third mixed beams; and
second mixing means for mixing one of the components of the second composite beam with one of the components of the fourth composite beam forming the second mixed beam, for mixing the other of the components of the second composite beam with the other of the components of the fourth composite beam forming the fourth mixed beam, and for recombining the components of the first and third composite beams from the first and third mixed beams for output at the second and fourth ports, respectively.

Another aspect of the present invention relates to an optical switch comprising:
a first input port for receiving a first composite beam having a first polarization component and an orthogonal second polarization component;
second input port for receiving a second composite beam having a first polarization component and an orthogonal second polarization component;
mixing means for mixing one of the components of the first composite beam with one of the components of the second composite beam forming a first mixed beam, and for mixing the other of the components of the first composite beam with the other of the components of the second composite beam forming a second mixed beam;
adjustable rotating means either for rotating all of the components by a first angle or for rotating all of the components by a second angle, which is 90° from said first angle; and
recombining means for recombining the first and second components of the first composite beam at a first output port and the first and second components of the second composite beam at a second output port when the adjustable rotating means rotates the components by the first angle, or for recombining the first and second components of the first composite beam at the second port and the first and second components of the second composite beam at the first port when the adjustable rotating means rotates the components by the second angle.

### Brief Description of the Drawings

The invention will be described in greater detail with reference to the accompanying drawings, which illustrate a preferred embodiment of the invention, wherein:
Fig. 1 is a schematic representation of the paths traveled by o and e polarized sub-beams in a typical polarization beam splitter;
Fig. 2 is a schematic representation of the device of the present invention that uses the State of Polarization (SOP) of the sub-beams of two input optical signals to separate and mix the sub-beams to form two new output signals;
Fig. 3 a schematic representation of a second embodiment of the device of Fig. 2;
Fig. 4 is a schematic representation of a third embodiment of the device of Fig. 2;
Fig. 5 is an isometric view of a fourth embodiment of the device of Fig. 2;
Fig. 6 is schematic representation of a four port optical circulator according to the present invention using the device of Fig. 2;
Fig. 7 is a schematic representation of a second embodiment of the four port optical circulator according to the present invention using the device of Fig. 3;
Fig. 8 is a schematic representation showing the optical paths of the o and e sub-beams through the optical components presented in Figure 7 for input at ports 1 and 3;
Fig. 9 is a schematic representation showing the optical paths of the o and e sub-beams through the optical components presented in Figure 7 for input at ports 2 and 4;
Fig. 10 is a schematic representation of a three port optical circulator according to the present invention using the device of Fig. 3;
Fig. 11 is a schematic representation of a switch according to the present invention; and
Fig. 12 is a schematic representation of an add/drop switch according to the present invention.

### Detailed Description of the Drawings

Figure 1 is a schematic diagram of a birefringent optical device (e.g. a rutile or a calcite crystal) that is used to split an input beam of light into two orthogonally polarized sub-beams, labeled o for ordinary and e for extraordinary. In a birefringent material, with a slow and a fast axis, the ordinary polarized beam will travel straight through while the extraordinary sub-beam will be displaced spatially (walked-off) depending upon the crystallographic axis orientation.

With reference to Figure 2, an optical signal S1 is launched into a birefringent component 1 through a top port 2 and is divided into o 3 and e 4 sub-beams. The sub-beams 3 and 4 are spatially displaced from each other by an amount and a direction dependent upon the composition and orientation of the birefringent component 1. The two sub-beams 3 and 4 exit the birefringent component 1 and sub-beam 3 passes through polarization rotator 5, typically a ½ waveplate, which changes the polarization of the sub-beam 3 so that sub-beam 3 and 4 have the same polarization. Since sub-beam 4 has been displaced, it does not pass through the polarization rotator 5 and therefore maintains its original polarization. The two sub-beams 3 and 4 (now both e sub-beams) then pass through birefringent component 6, which displaces both, directing them to output ports 7 and 8, respectively.

Similarly, optical signal S2 is launched into birefringent component 1 through a port 9 and is split into o sub-beam 11 and e sub-beam 12. Note that the input ports 2 and 9 for the optical signals S1 and S2 are selected such that the optical paths do not overlap in the space between optical components 5 and 13. Sub-beam 11 passes through birefringent component 1, but does not pass through polarization rotator 13, which has the exact optical characteristics of polarization rotator 5. Sub-beam 12 is displaced from the original path and passes through polarization rotator 13. Now both of the sub-beams 11 and 12 are identically polarized. Accordingly, due to the crystallographic orientation of the birefringent component 6, sub-beams 11 and 12 (now both o sub-beams) pass straight through birefringent component 6 and exit through output ports 7 and 8, respectively. In this arrangement sub-beams 3 and 11 are combined at output port 7, and sub-beams 4 and 12 are combined at output port 8. In this arrangement, assuming that both of the birefringent components 1 and 6 have the same characteristics, birefringent component 6 must be longer than birefringent component 1 to ensure that the walk off of sub-beams 3 and 4 is sufficient to meet sub-beams 11 and 12.

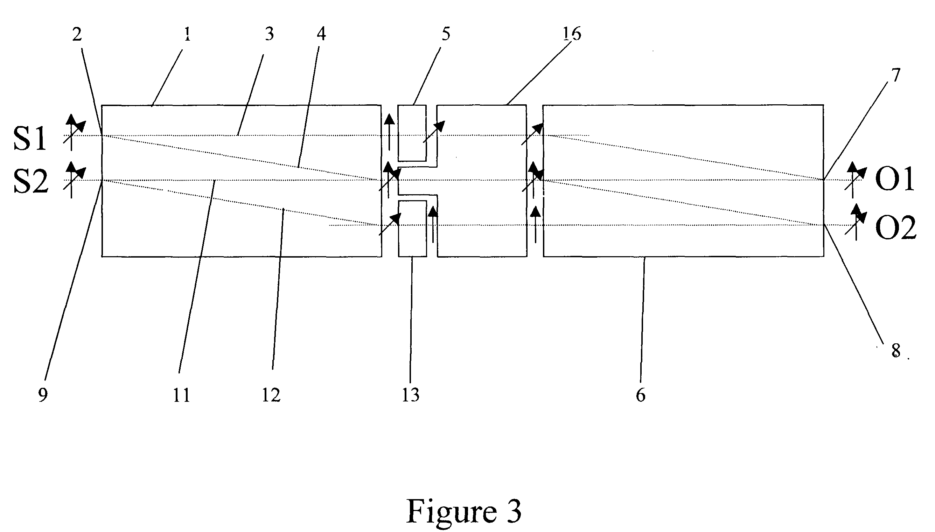

Figure 3 illustrates a further embodiment of the present invention, in which two birefringent components 1 and 6 have the same length. Accordingly, the paths for sub-beams 4 and 11 become overlapped. Otherwise the optical functions are the same as in Figure 2 except for a glass support piece 16 which is included to support the polarization rotators 5 and 13.

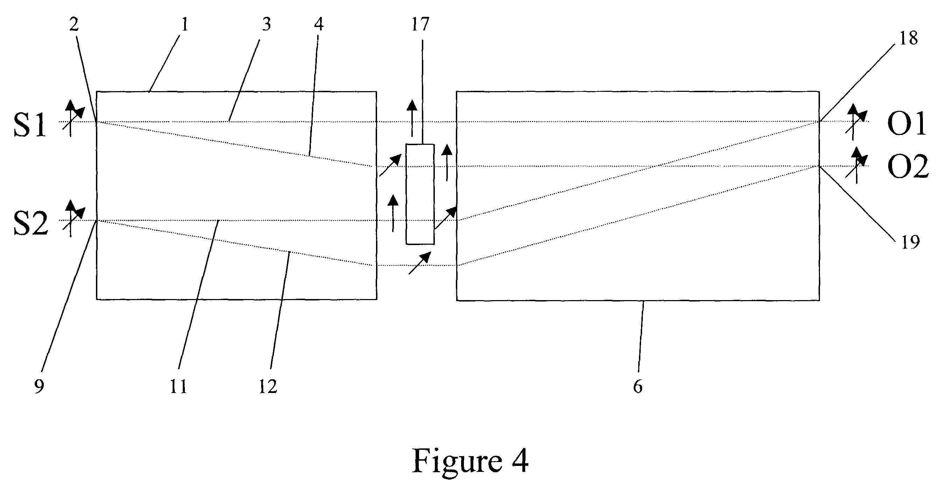

Figure 4 illustrates another embodiment of the present invention in which the optical path of sub-beam 11 does not overlap the optical path of sub-beam 4. The difference in approaches lies in the fact that the optical axis of the second birefringent component 6 is inverted relative to the optical axis of the first birefringent component, and accordingly only one waveplate is necessary. Thus the walk-off direction (up) of the second birefringent component is opposite to the walk-off direction (down) of the first birefringent component.

Referring to Figure 4, the optical signal S1 has optical sub-beams 3 and 4. Sub-beam 3 passes straight through optical component 1, bypassing polarization rotator 17, and passes straight through birefringent component 6 to output 18. Sub-beam 4 is displaced by birefringent component 1 and passes through birefringent component 17 thereby changing its polarization enabling it to pass straight through birefringent component 6 to output port 19. The optical signal S2 has optical sub-beams 11 and 12. Sub-beam 11 passes straight through birefringent component 1 and into polarization rotator 17, which rotates the polarization of sub-beam 11 by 90^{□}. Accordingly the sub-beam 11 is displaced in birefringent component 6 and is directed to output 18. Since the birefringent component 6 has been inverted relative to the birefringent component 1 e-polarized sub-beams are displaced upwardly instead of downwardly. Sub-beam 12 is displaced in birefringent component 1, its optical path bypasses polarization rotator 17. Accordingly sub-beam 12 is again displaced by birefringent component 6, whereby it exits birefringent component 6 at output port 19. Therefore the output signals are O1 = sub-beam 3 + sub-beam 11 and O2 = sub-beam 4 + sub-beam 12.

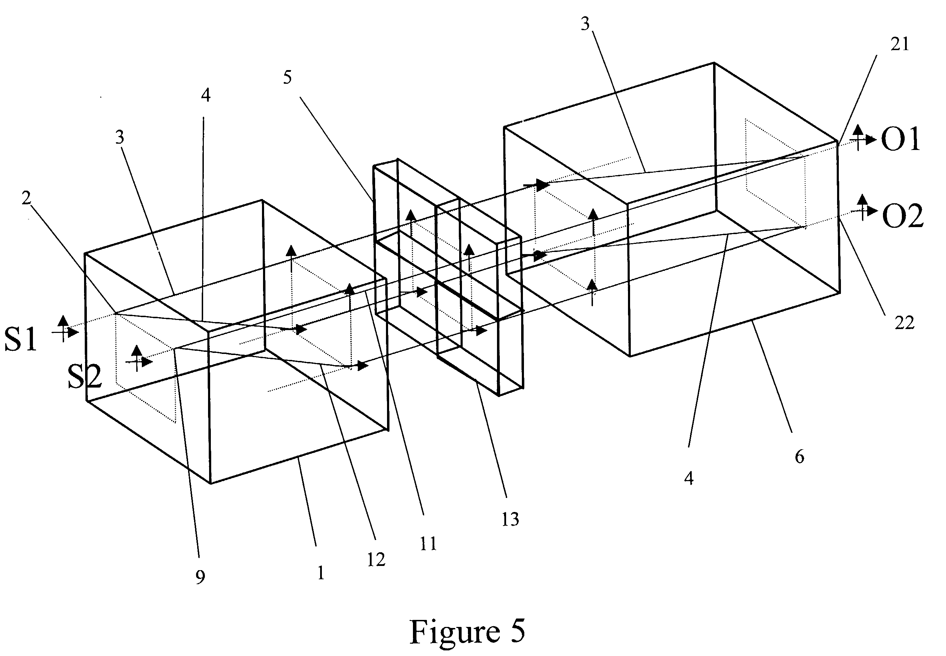

In another embodiment illustrated in Figure 5, the two birefringent components have optical axes that are perpendicular to each other, i.e. the walk-off direction (down) of the first birefringent component 1 is perpendicular to the walk-off direction (right side) of the second birefringent component 6. As a result, the position of the polarization rotators 5 and 13 must be adjusted, whereby they are vertically and laterally offset, and the position of the output ports are adjusted, whereby they are superposed instead of adjacent.

Referring to Figure 5, Sl has two sub-beams 3 and 4. Sub-beam 3 (o sub-beam) travels straight through birefringent component 1, and through polarization rotator 5, which change the polarization thereof. Since the polarization of sub-beam 3 has changed (e sub-beam), it gets displaced by birefringent component 6 due to the crystallographic orientation thereof. However, since the optical axis of birefringent component 6 has been rotated by 90°, sub-beam 3 is displaced to the right, not vertically, and exits output port 21. Sub-beam 4 is vertically displaced downwardly by birefringent component 1, thereby bypassing polarization rotators 5 and 13. Accordingly, sub-beam 4 is laterally displaced by birefringent component 6 and exits output port 22.

Signal S2 has two sub-beams 11 and 12. Sub-beam 11 travels straight through birefringent component 1, missing optical component 13, and straight through birefringent component 6 exiting output port 21. Sub-beam 12 is vertically displaced by birefringent component 1 and passes through polarization rotator 13, which results in a polarization change. Sub-beam 12 then travels straight through birefringent component 6 to output port 22. Accordingly output signals O1 = sub-beam 3 + sub-beam 11 while O2 = sub-beam 4 + sub-beam 12.

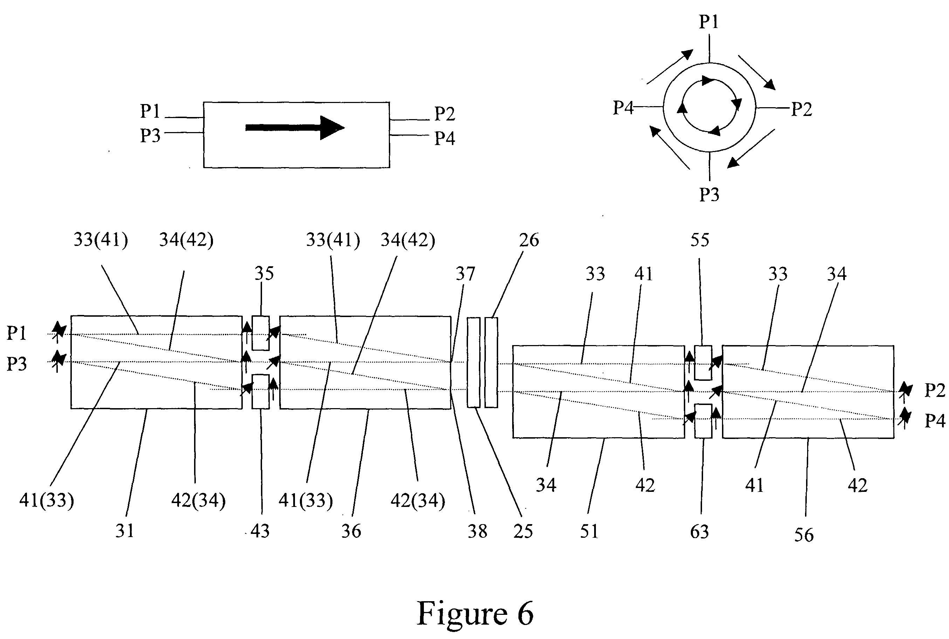

Figure 6 illustrates an optical circulator utilizing two of the previously described devices aligned in series with a non-reciprocal 90° rotator, typically a Faraday non-reciprocal 45° rotator and a half waveplate, therebetween. Each provides a 45^{□} shift so that when sub-beams are travelling in the forward direction (from left to right) this combination results in a cumulative change in the SOP. However, when the sub-beams are traveling in the reverse direction (from right to left) the result is no change in the SOP of the sub-beams, since the non-reciprocal Faraday rotator has a -45^{□} shift and the waveplate a 45^{□} shift.

Accordingly, when signals are launched into ports P1 and P3 sub-beams 33 and 34 get mixed with sub-beams 41 and 42 forming a first mixed beam, containing sub-beams 33 and 41, at output port 37, and a third mixed beam, containing sub-beams 34 and 42, at output port 38. The cumulative effect of passing through the waveplate and the Faraday non-reciprocal rotator, in the forward direction, is that the components of the mixed beams are rotated by 90^{□}. Thereafter sub-beams 33 and 34 end up recombining at port P2, and sub-beams 41 and 42 end up recombining at port P4.

When optical signals are fed into ports P2 and P4, of Figure 6, we can use the same reference numerals 33, 34, 41 and 42 to identify the sub-beams travelling through birefringent components 51 and 56.

However, since there is zero cumulative effect on the sub-beams after passing through the Faraday non-reciprocal rotator 25 and ½ waveplate 26 in the reverse direction, we must renumber the sub-beams when travelling through birefringent components 31 and 36. Therefore sub-beam reference numerals for the reverse direction are shown in brackets.

Due to the zero cumulative effect of elements 25 and 26, sub-beams (33), (34), (41) and (42) travel different paths in the reverse direction than they did in the forward direction. As a result sub-beam (33) and (34) recombine at port P3 and sub-beams (41) and (42) recombine at port P1.

To summarize the embodiment presented in Figure 6, an optical signal placed on the input of port 1 passes through the optical system to port 2. An optical signal that is placed on port 2 as input passes through the optical system to port 3. An optical signal that is placed on port 3 as input passes through the optical system to port 4. An optical signal that is placed on port 4 as input passes through the optical system to port 1. Therefore, this system is a closed 4 port optical circulator.

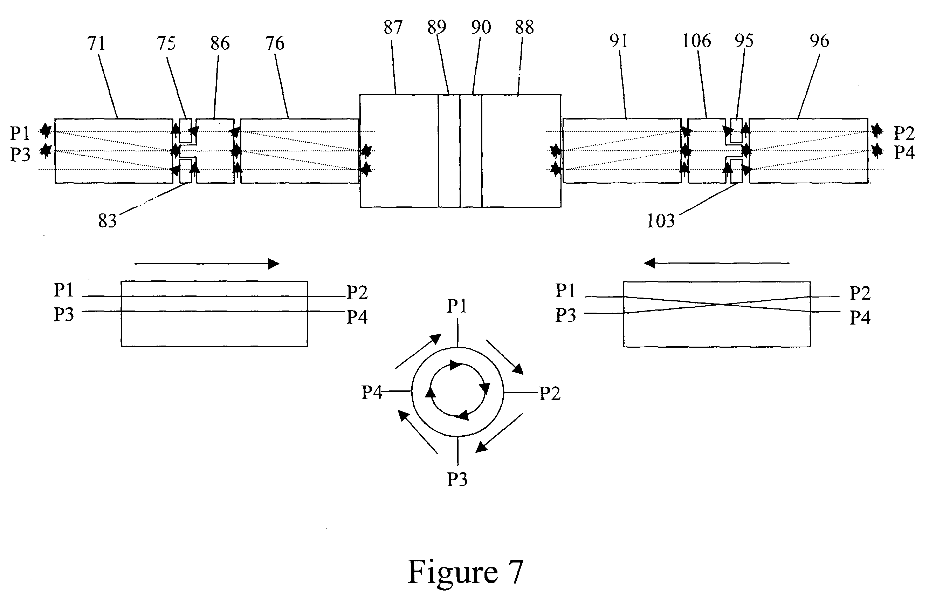

Figures 7 to 9 b) are schematic representations of an in-line 4 port optical circulator using two of the basic structures defined in Fig. 3, positioned back-to-back with two ¼ pitch lenses 87 and 88, a Faraday non-reciprocal rotator 89 and a ½ waveplate 90, positioned therebetween. This particular lens arrangement results in a ½ pitch lens system that enables the paths of the sub-beams to cross. The lenses, combined with the inverting of the optical elements on the right side of the optical system with respect to the elements on the left side of the optical system, results in a compact, closed, in-line, four port optical circulator. The optical component layout on the right side has the same optical effect as going from right to left in the optical component layout on the left side. Thus an e sub-beam is displaced down the page by optical components 71 and 76 and up the page by optical components 91 and 96. In other words, the walk-off direction of components 91 and 96 is opposite to the walk-off direction of components 71 and 76.

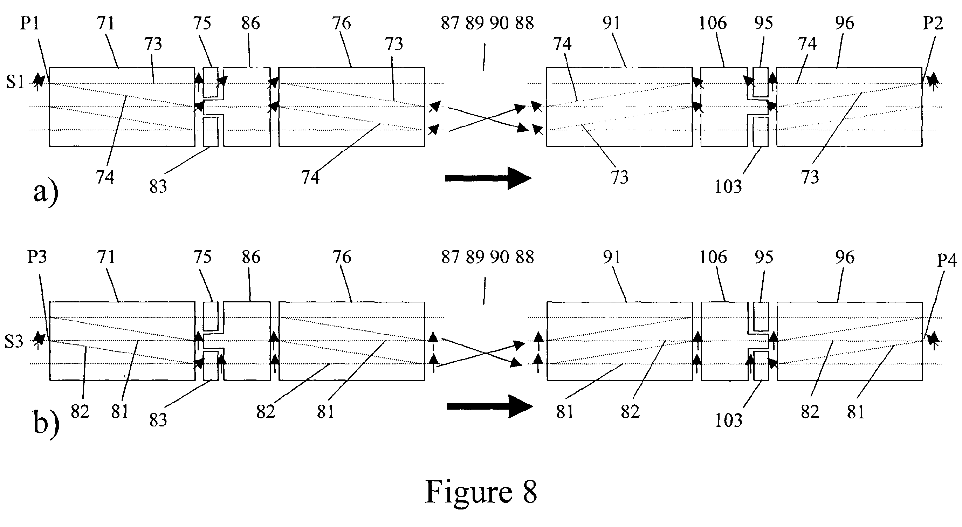

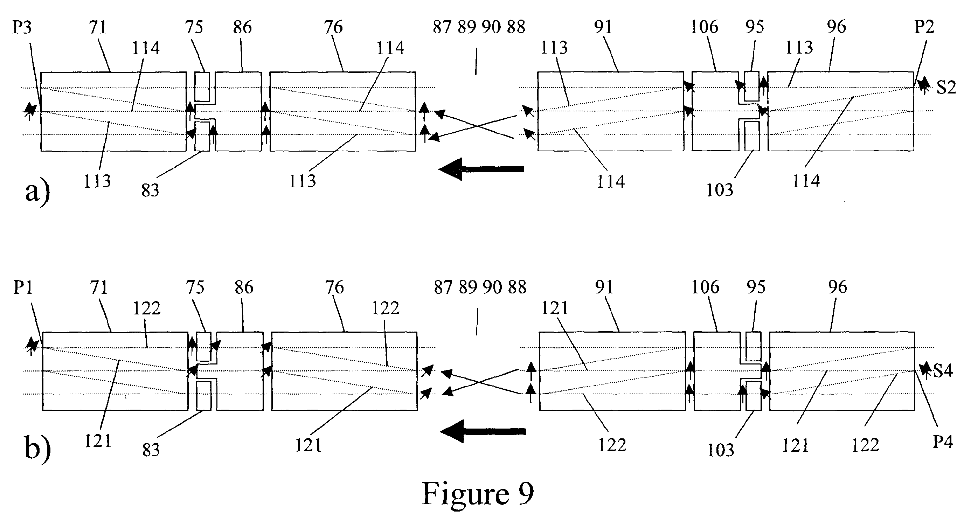

The specific paths taken by each sub-beam will be discussed in greater detail with reference to Fig 8a, 8b, 9a, and 9b.

Figures 8 and 9 are a more detailed schematic of the sub-beam paths for the optical system presented in Figure 7. Figures 8 a) and 8 b) show the sub-beam paths for input signals at ports 1 and 3, respectively while Figures 9 a) and 9 b) show the sub-beam paths for inputs at ports 2 and 4, respectively. Figures 8 a) and 8 b) illustrate the sub-beams travelling left to right, in the optical system, and Figures 9 a) and 9 b) illustrate the sub-beams travelling right to left, in the optical system. Faraday non-reciprocal rotator 89 and ½ waveplate 90 cause no change in SOP for sub-beams travelling from left to right. However, there is a change in the SOP for sub-beams travelling from right to left in the optical system.

With reference to Figure 8 a), a signal Sl is input to port P1 and splits into sub-beams 73 and 74. Sub-beam 73 travels straight through birefringent component 71 and impinges on polarization rotator 75, which changes the polarization thereof. Subsequently sub-beam 73 passes straight through the glass support element 86 but is displaced by birefringent component 76. The sub-beam 73 is inverted by the lenses 87 and 88, however the optical elements 89 and 90 cause no SOP change therein. Sub-beam 73 is displaced by birefringent element 91, passes through glass element 106, bypasses polarization rotators 95 and 103, is displaced by birefringent component 96 and exits the system at output port P2.

Sub-beam 74 is displaced by birefringent element 71, bypasses polarization rotators 75 and 83, passes through glass element 86, and is displaced by birefringent element 76. Sub-beam 74 is inverted by optical lens 87 and 88 but optical element 89 and 90 cause no SOP change therein. Accordingly, sub-beam 74 is displaced by birefringent element 91, passes through glass element 106, and passes through polarization rotator 95, which causes a SOP change therein. Accordingly, sub-beam 74 passes straight through birefringent element 96 and exits output port P2 along with sub-beam 73.

In Figure 8 b), a signal S3 is launched through port P3 and divided into sub-beams 81 and 82. Sub-beam 81 travels straight through birefringent component 71 and straight through glass element 86, bypassing polarization rotators 75 and 83. Sub-beam 81 then travels straight through birefringent component 76 and is inverted by optical lens 87 and 88. As before, optical elements 89 and 90 cause no change in SOP in the forward direction. Sub-beam 81 travels straight through birefringent component 91 and glass element 106, impinging upon polarization rotator 103, which causes a SOP therein. Accordingly, sub-beam 81 is displaced by birefringent element 96 and exits output port P4.

Sub-beam 82 is displaced by birefringent element 71 and impinges on polarization rotator 83, which causes a SOP change therein. Accordingly, sub-beam 82 passes through glass element 86 and straight through birefringent component 76. Subsequently sub-beam 82 is inverted by optical lens 87 and 88 with no change in SOP by optical elements 89 and 90. Therefore, sub-beam 82 then travels straight through birefringent component 91 and glass element 106, bypassing polarization rotators 95 and 103. Sub-beam 82 then travels straight through birefringent component 96 and exits output port P4, along with sub-beam 81.

With reference to Figure 9 a), a signal S2 is launched through port P2 and is divided into sub-beams 113 and 114. The sub beam 113 travels straight through the birefringent component 96 and impinges on the polarization rotator 95, causing a SOP change therein. Accordingly, sub-beam 113 passes through glass element 106 and then is displaced by birefringent component 91. Subsequently, sub-beam 113 is inverted by optical lenses 88 and 87 and undergoes a change in SOP via optical elements 90 and 89. Therefore, sub-beam 113 travels straight through birefringent component 76, glass element 86, and polarization rotator 83, which causes a SOP change therein. Accordingly, sub-beam 113 is displaced by birefringent component 71 and exits output port P3.

The sub-beam 114 is displaced by the birefringent component 96, bypasses the polarization rotators 95 and 103, and travels through glass element 106. Sub-beam 114 is then displaced by birefringent element 91, inverted by optical lens 87 and 88, and undergoes a change in SOP due to optical elements 89 and 90. Therefore, sub-beam 114 travels straight through birefringent component 76 and glass element 86, bypassing polarization rotators 75 and 83, and then travels straight through birefringent component 71, exiting at output port P3, along with sub-beam 113.

With reference to Figure 9 b), a signal S4 is launched on port P4 and is divided into sub-beams 121 and 122. The sub-beam 121 travels straight through the birefringent component 96 and the glass element 106, bypassing the polarization rotators 95 and 103. Then sub-beam 121 travels straight through birefringent component 91, and is inverted by optical lens 87 and 88. A change in the SOP occurs due to optical components 89 and 90. Accordingly, sub-beam 121 is displaced by birefringent component 76 and travels straight through glass element 86, bypassing polarization rotators 83 and 75. Subsequently, sub-beam 121 is displaced by birefringent component 71, and exits at output port P1.

The sub-beam 122 is displaced by the birefringent component 96 and impinges on the polarization rotator 103, which changes the SOP thereof. Accordingly, sub-beam 122 travels through glass component 106 and straight through birefringent component 91. Sub-beam 122 is inverted by optical lens 87 and 88 and undergoes a change in SOP due to optical components 89 and 90. Therefore, sub-beam 122 is displaced by birefringent component 76, travels through glass component 86, and impinges on polarization rotator 75, which changes the SOP thereof. As a result, sub-beam 122 travels straight through birefringent component 71 and exits output port P1, along with sub-beam 121.

To summarize the embodiment presented in Figures 7 to 9 b), an optical signal placed on the input of port 1 passes through the optical system to port 2. An optical signal that is placed on port 2 as input passes through the optical system to port 3. An optical signal that is placed on port 3 as input passes through the optical system to port 4. An optical signal that is placed on port 4 as input passes through the optical system to port 1.

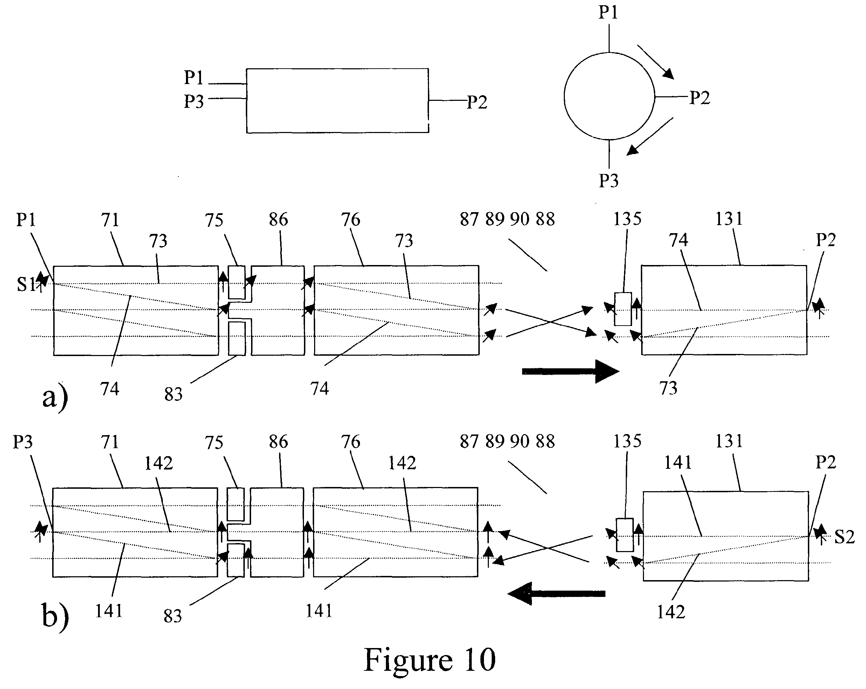

Figure 10 is a schematic representation of a 3 port circulator using the devices of Fig. 3 in series with a single birefringent component 131 having the two lenses 87 and 88, the Faraday non-reciprocal rotator, and the ½ waveplate 90, thereinpetween. The optical axis of the birefringent component 131 is inverted relative to the optical axis of birefringent components 71 and 76, i.e. the walk-off direction of the birefringent component 131 is the opposite to the walk-off direction of birefringent components 71 and 76. Therefore, an e sub-beam that travels down the page in birefringent components 71 and 76 travels up the page in birefringent component 131.

With reference to Figure 10 a), an optical signal S1 is again launched on port P1 and is divided into sub-beams 73 and 74. Sub-beam 73 travels straight through birefringent component 71 and impinges on polarization rotator 75, which changes the SOP thereof. Accordingly, the sub-beam 73 travels through glass element 86 and gets displaced by birefringent component 76. Subsequently sub-beam 73 is inverted by optical lens 87 and 88. The SOP of the sub-beam 73 is unchanged by optical elements 89 and 90. Sub-beam 71 bypasses polarization rotator 135, is then displaced by birefringent component 131, and exits at output port P2.

Sub-beam 74 is displaced by birefringent component 71 and travels through glass element 86, bypassing polarization rotators 75 and 83. Sub-beam 74 is further displaced by birefringent component 76, and inverted by optical lens 87 and 88. The SOP is unchanged by optical elements 89 and 90. Sub-beam 74 impinges on polarization rotator 135, which changes the SOP thereof, and then travels straight through birefringent component 131, exiting at output port P2, along with sub-beam 73.

When an optical signal S2 is input at port P2 sub-beams 141 and 142 are created in birefringent component 131. Sub-beam 141 travels straight through birefringent component 131 and impinges on polarization rotator 135, which changes the SOP thereof. Sub-beam 141 is then inverted by optical lens 87 and 88 and undergoes another SOP change in elements 89 and 90. Accordingly, sub-beam 141 travels straight through birefringent component 76 and through glass element 86, impinging on polarization rotator 83, which causes a change in the SOP thereof. Therefore, sub-beam 141 is displaced by birefringent component 71 and exits output port P3.

The sub-beam 142 is originally displaced by birefringent component 131, which enables it to bypass polarization rotator 135. Then the sub-beam 142 is inverted by optical lens 87 and 88 and undergoes a change in the SOP due to optical elements 89 and 90. Accordingly, sub-beam 142 travels straight through birefringent component 76 and glass element 86, bypassing polarization rotators 75 and 83. Therefore, sub-beam 142 travels straight through birefringent component 71 and exits output port P3 with sub-beam 141.

The optical elements 89 and 90 can be replaced by any component that performs the same function such as a liquid crystal rotator.

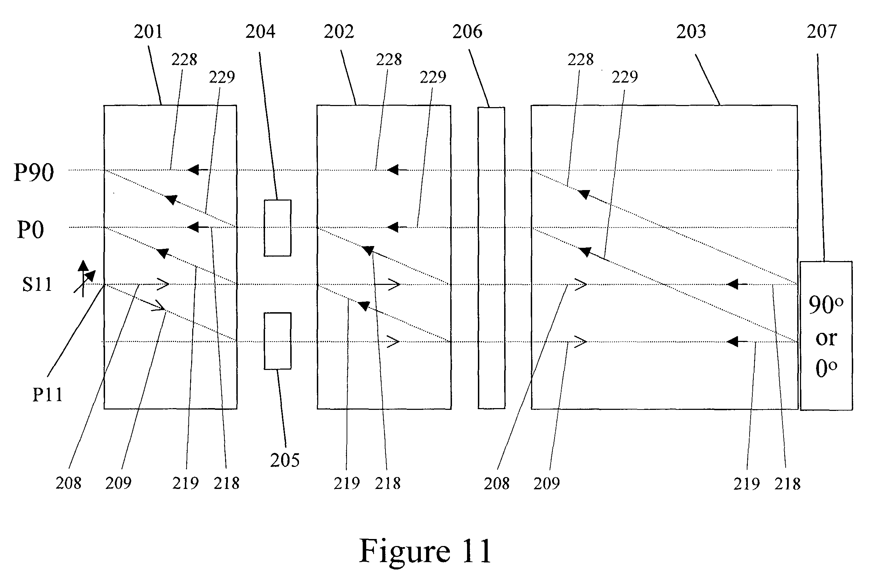

With reference to Figure 11, the polarization dependent mixing devices of the previous embodiments are used in a switching device, which includes birefringent elements 201, 202 and 203, polarization rotators (half waveplates) 204 and 205, a non-reciprocal rotator 206 defined by a Faraday rotator with a ½ waveplate, and an adjustable rotator 207. The adjustable rotator 207 preferably comprises a liquid crystal cell with a reflective surface for reflecting incident sub-beams. The liquid crystal cell, which is sensitive to different input voltages, variably adjusts the polarization of the sub-beams. In a first position the sub-beams pass through the liquid crystal cell resulting in a cumulative change in the SOP of 90^{□} . Alternatively, the liquid crystal cell can be arranged whereby no cumulative change in the polarization of the sub-beams results. Of course, it is also possible to have other arrangements including one, which rotates both sub-beams by different amounts.

When a signal S11, is launched into an input port P11 incident sub-beams 208 and 209 are created by the birefringent element 201. Sub-beam 208 travels straight through birefringent component 201, bypassing polarization rotators 204 and 205, through birefringent element 202, and non-reciprocal rotator 206. Sub-beam 208 is unaffected by non-reciprocal rotator 206, and travels straight through birefringent element 203. If the adjustable rotator is set to provide no change in polarization, the incident sub-beam 208 is reflected with no change in the SOP. Output sub-beam 218 then travels back through birefringent element 203 and, when it passes through non-reciprocal rotator 206, undergoes a change in SOP. Accordingly, output sub-beam 218 is displaced by birefringent element 202 and impinges polarization rotator 204, which causes a change in the SOP. Accordingly, output sub-beams 218 travels straight through the birefringent element 201 and exits on port P0.

Incident sub-beam 209 is displaced by birefringent element 201 and impinges on polarization rotator 205, which causes a change in the SOP. Accordingly, sub-beam 209 travels straight through birefringent elements 202 and 203 and non-reciprocal rotator 206. Since we already assumed that the adjustable rotator was set to have no effect on the incident sub-beams, sub-beam 209 is reflected by optical element 207 with no change in the SOP. Output sub-beam 219 travels straight back through birefringent element 203, whereby the SOP is changed by the non-reciprocal rotator 206. Accordingly, output sub-beam 219 is displaced by birefringent element 202 and bypasses polarization rotators 205 and 204. Output sub-beam 219 is then further displaced by birefringent element 201 and exits port P0, along with sub-beam 218. A first output path is defined by sub-beams that travel straight through the birefringent element 203 and get displaced by the birefringent element 202.

Assuming now that the adjustable rotator is set to rotate the incident sub-beams by 90^{□}, the SOP of both incident sub-beams 208 and 209 will be changed. This change in the SOP causes output sub-beams 228 and 229 to be displaced in birefringent element 203. Non-reciprocal rotator 206 causes another change in the SOP to occur which enables output sub-beams 228 and 229 to travel straight through birefringent element 202. The path traveled by sub-beams 228 and 229 is defined as the second output path. Output sub-beam 228 bypasses the polarization rotators 204 and 205, and travels straight through birefringent element 201, while output sub-beam 229 travels through polarization rotator 204 which changes the polarization and causes sub-beam 229 to be displaced in birefringent element 201. As a result both output sub-beams 228 and 229 exit output port P90.

With reference to Figures 6 and 7, if the non-reciprocating rotators, defined by Faraday rotators 25 and 89 with ½ waveplates 26 and 90, are replaced by adjustable switches, i.e. liquid crystal cells, 2 x 2 switches can be constructed. In this case, when the adjustable rotator is set to maintain the polarization of the various sub-beams constant, a composite beam entering P1 will exit P2 and vice versa. Similarly, a composite beam entering P3 will exit P4 and vice versa. However, if the adjustable rotator is set to rotate all of the sub-beams by 90°, a composite beam launched into P1 will exit P4 and vice versa. Moreover a composite beam launched into P3 will exit P2 and vice versa.

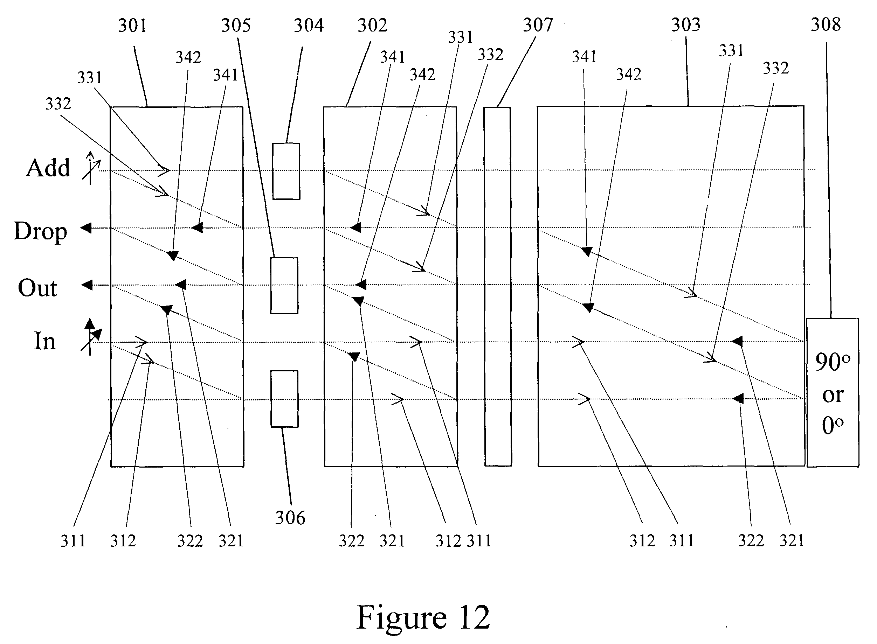

Figure 12 illustrates a preferred embodiment of this type of Add/Drop switch in the "folded" arranged, which includes a mirror to reflect the mixed beams after passing through the adjustable rotator . The Add/Drop switch includes birefringent elements 301, 302 and 303, polarization rotators (waveplates) 304, 305 and 306, non-reciprocal rotator (Faraday and ½ waveplate) 307, and adjustable rotator 308. First we will assume that the adjustable rotator 308 is set to provide no change in the SOP of the sub-beams.

Light enters the In port, divides into incident sub-beams 311 and 312, which pass through birefringent element 301. Subsequently, sub-beam 312 travels through polarization rotator 306, which changes the SOP thereof to be parallel to sub-beam 311. Accordingly both sub-beams 311 and 312 travel straight through birefringent elements 302 and 303, and non-reciprocal rotator 307 unaffected. Since the adjustable rotator 308 is set at zero, the incident sub-beams are reflected without a change in the SOP. Therefore, output sub-beams 321 and 322 pass back through birefringent element 303 along the same path as incident sub-beams 311 and 312. When the sub-beams pass through non-reciprocal rotator 307, their SOP changes and accordingly when they pass through birefringent element 302 they get displaced. This output path is defined as the first output path. Subsequently, output sub-beam 321 passes through polarization rotator 305, which changes the SOP, so that sub-beams 321 and 322 have orthogonal polarizations. Accordingly as output sub-beams 321 and 322 pass through birefringent element 301 they recombine at the Out port.

Light enters the ADD port and divides into incident sub-beams 331 and 332 as it passes through birefringent element 301. The SOP of sub-beam 331 changes as it passes through polarization rotator 304 which enables both sub-beams 331 and 332 to be displaced similarly as they traverse birefringent elements 302, 303 and non-reciprocal rotator 307. Since the adjustable rotator is set at zero, the output sub-beams 341 and 342 are reflected back, retracing the paths of incident sub-beams 331 and 332 until impinging non-reciprocal rotator 307. In this direction the non-reciprocal rotator 307 provides a change in the SOP which enables the output sub-beams 341 and 342 to travel straight through birefringent element 302. This path is referred to as the second output path. Subsequently, sub-beam 342 traverses polarization rotator 305, which changes the polarization thereof and enables sub-beams 341 and 342 to converge at the Drop port after passing through birefringent element 301.

If the adjustable rotator 308 is set to rotate the incident sub-beams by 90^{□}, incident sub-beams 311 and 312 will follow the second output paths previously defined by output sub-beams 341 and 342, respectively. Similarly incident sub-beams 331 and 332 will follow the first output paths of output sub-beams 321 and 322, respectively.

Accordingly, when the adjustable rotator 308 is set at 0^{□} a signal entering the Add port exits the Drop port and the signal entering the In port exits at the Out port. Moreover, when the adjustable rotator 308 is set at 90^{□} a signal entering the Add port exits the Out port, and a signal entering the In port exits the Drop port.

## Claims

1. A method of mixing two beams of light comprising the steps of:
a) receiving a first composite beam, having a first polarization component and an orthogonal second polarization component, at a first location;
b) separating the first and second polarization components of the first beam;
c) rotating the first polarization or the orthogonal second polarization component of the composite first beam to provide two first sub-beams having a same polarization;
d) receiving a second composite beam, having a first polarization component and an orthogonal second polarization component, at a second location;
e) separating the first and second polarization components of the second composite beam;
f) rotating the first or the second polarization component of the second composite beam to provide two second sub-beams having a same polarization direction oriented orthogonally to the two first sub-beams;
g) mixing one of the two first sub-beams with one of the two second sub-beams to provide a first mixed sub-beam at a third location; and
h) mixing the other of the two first sub-beams with the other of the two second sub-beams to provide a second mixed sub-beam at a fourth location.

2. The method as defined in claim 1, wherein step b) comprises launching the first composite beam into a first birefringent crystal.

3. The method as defined in claim 1, wherein step e) comprises launching the second composite beam into the first birefringent crystal.

4. A polarization dependent optical signal mixing device comprising:
first input means for receiving a first composite beam having a first polarization component and an orthogonal second polarization component;
first splitting means for separating the first and second polarization components of the first composite beam;
first polarization rotating means for rotating the first or the second polarization component of the first composite beam to provide two first sub-beams having a same polarization;
second input means for receiving a second composite beam having a first polarization component and an orthogonal second polarization component;
second splitting means for separating the first and second polarization components of the second composite beam;
second polarization rotating means for rotating the first or the second polarization component of the second composite beam to provide two second sub-beams having a same polarization, which is orthogonal to the polarization of the first sub-beams;
first mixing means for mixing one of the first sub-beams with one of the second sub-beams to provide a first mixed beam at a third location; and
second mixing means for mixing the other of the first sub-beams with the other of the second sub-beams to provide a second mixed beam at a fourth location.

5. The optical device as defined in claim 4, wherein the first end the second splitting means define at least a first birefringent crystal, having a first walk-off direction; and wherein the first and the second splitting means define at least a second birefringent crystal having a second walk-off direction; and wherein the first and second polarization rotators are disposed between the first and second birefringent crystals.

6. The optical device as defined in claim 5, wherein the first and the second polarization rotating means are a single element traversed by one of the first sub-beams and one of the second sub-beams; and wherein the first walk-off direction is opposite to the second walk-off direction.

7. The optical device according to claim 5, wherein the first polarization rotating means is laterally and vertically offset from the second polarization rotating means; and wherein the first walk-off direction is substantially perpendicular to the second walk-off direction.

8. An optical circulator device comprising:
a first port for inputting a first composite beam having a first polarization component and an orthogonal second polarization component, and for outputting a fourth composite beam having a first polarization component and an orthogonal second polarization component, input from a fourth port;
a third port for inputting a third composite beam having a first polarization component and an orthogonal second polarization component, and for outputting a second composite beam having a first polarization component and an orthogonal second polarization component, input from a second port;
first mixing means for mixing one of the components of the first composite beam with one of the components of the third composite beam forming a first mixed beam, for mixing the other of the components of the first composite beam with the other of the components of the third composite beam forming a third mixed beam, and for recombining the components of the second and fourth composite beams from second and fourth mixed beams for output at the third and first ports, respectively;
non-reciprocal rotating means for making the components of the second and fourth mixed beams entering therein orthogonal to those passing therethrough, while unaffecting the polarity of the components of the first and third mixed beams; and
second mixing means for mixing one of the components of the second composite beam with one of the components of the fourth composite beam forming the second mixed beam, for mixing the other of the components of the second composite beam with the other of the components of the fourth composite beam forming the fourth mixed beam, and for recombining the components of the first and third composite beams from the first and third mixed beams for output at the second and fourth ports, respectively.

9. The optical circulator device according to claim 8, wherein the first mixing means comprises:
first splitting/combining means for separating the first and second polarization components of the first composite beam, and for combining the first and second polarization components of the fourth composite beam at the first port;
first polarization rotating means for rotating one of the components of the first composite beam providing two first sub-beams having a same polarization, and for rotating one of the components of the fourth composite beam providing two fourth sub-beams having orthogonal polarizations;
second splitting/combing means for separating the first and second polarization components of the third composite beam, and for combining the first and second polarization components of the second composite beam at the third port;
second polarization rotating means for rotating one of the components of the third composite beam providing two third sub-beams having a same polarization, and for rotating one of the components of the second composite beam providing two second sub-beams having orthogonal polarizations;
first mixing/separating means for mixing one of the first sub-beams with one of the third sub-beams to form the first mixed beam, and for separating the second mixed beam into one of the second sub-beams and one of the fourth sub-beams; and
second mixing/separating means for mixing the other of the first sub-beams with the other of the third sub-beams to form the third mixed beam, and for separating the fourth mixed beam into the other of the fourth sub-beams and the other of the second sub-beams; and
wherein the second mixing means comprises:
third mixing/separating means for separating the first mixed beam into one of the first sub-beams and one of the third sub--beams, and for mixing one of the second sub-beams with one of the fourth sub-beams forming the second mixed beam;
fourth mixing/separating means for separating the third mixed beam into the other of the first sub-beams and the other of the third sub-beams, and for mixing the other of the second sub-beams with the other of the fourth sub-beams forming the fourth mixed beam;
third polarization rotating means for rotating one of the first sub-beams to ensure that the first sub-beams are orthogonal to each other, and for rotating one of the second sub-beams to ensure that the second sub-beams have the same polarization;
fourth polarization rotating means for rotating one of the third sub-beams to ensure that the third sub-beams are orthogonal to each other, and for rotating one of the fourth sub-beams to ensure that the fourth sub-beams have the same polarization;
third splitting/combining means for combining the first sub-beams at the second port, and for separating the first and second polarization components of the second composite beam; and
fourth splitting/combing means for combining the third sub-beams at the fourth port, and for separating the first and second polarization components of the fourth composite beam.

10. The optical circulator according to claim 9, wherein the first and second splitting/combining means define a first birefringent crystal; wherein the third and fourth splitting/combining means define a second birefringent crystal; wherein the first and second mixing/separating means define a third birefringent crystal; and wherein the third and fourth mixing/separating means define a fourth birefringent crystal.

11. The optical circulator according to claim 10, further comprising an optical lens for redirecting the mixed beams, whereby the first mixed beam crosses paths with the third mixed beam and the second mixed beam crosses paths with the fourth mixed beam; and wherein the third and fourth birefringent crystals have walk-off directions opposite to those of the first and second birefringent crystals.

12. An optical switch comprising:
a first input port for receiving a first composite beam having a first polarization component and an orthogonal second polarization component;
second input port for receiving a second composite beam having a first polarization component and an orthogonal second polarization component;
mixing means for mixing one of the components of the first composite beam with one of the components of the second composite beam forming a first mixed beam, and for mixing the other of the components of the first composite beam with the other of the components of the second composite beam forming a second mixed beam;
adjustable rotating means either for rotating all of the components by a first angle or for rotating all of the components by a second angle, which is 90° from said first angle; and
recombining means for recombining the first and second components of the first composite beam at a first output port and the first and second components of the second composite beam at a second output port when the adjustable rotating means rotates the components by the first angle, or for recombining the first and second components of the first composite beam at the second port and the first and second components of the second composite beam at the first port when the adjustable rotating means rotates the components by the second angle.

13. The device according to claim 12, wherein the mixing means comprises:
first splitting means for splitting the first composite beam into first and second orthogonally polarized sub-beams;
first polarization rotating means for rotating one of the first or second polarized sub-beams to ensure both of the first and second sub-beams have the same polarization;
second splitting means for splitting the second composite beam into third and fourth orthogonally polarized sub-beams;
second polarization rotating means for rotating one of the third or fourth polarized sub-beams to ensure both of the third and fourth sub-beams have the same polarization, which is orthogonal to the polarization of the first and second sub-beams;
first combining means for combining the first and third sub-beams forming the first mixed beam; and
second combining means for combining the second and
fourth sub-beams forming the second mixed beam; and
wherein the recombining means comprises:
third splitting means for splitting the first mixed beam into the first and third orthogonally polarized sub-beams;
third polarization rotating means for rotating one of the first and third sub-beams to ensure that both of the first and third sub-beams have the same polarization;
fourth splitting means for splitting the second mixed beam into the second and fourth orthogonally polarized sub-beams;
fourth polarization rotating means for rotating one of the second and fourth sub-beams to ensure both of the second and fourth sub-beams have the same polarization, which is orthogonal to the polarization of the second and fourth sub-beams;
third combining means for combining the first and second sub-beams at one of the first or the second output ports; and
fourth combining means for combining the third and fourth sub-beams at the other of the first or the second output ports.

14. The device according to claim 13, wherein the first and second splitting means define a first birefringent crystal; wherein the third and fourth splitting means define a second birefringent crystal; wherein the first and second combining means define a third birefringent crystal; and wherein the third and fourth combining means define a fourth birefringent crystal.

15. The device according to claim 13, further comprising reflecting means for reflecting the first and second mixed beams after passing through the adjustable rotating means; wherein the first splitting means, the second splitting means, the third combining means, and the fourth combining means define a first birefringent crystal; and wherein the third splitting means, the fourth splitting means, the first combining means, and the second combining means define a second birefringent crystal.

16. The device according to claim 15, wherein the first angle is 0°; and wherein the device further comprises:
non-reciprocal rotating means, between the first and second birefringent crystals, for rotating all of the sub-beams only after being reflected back through the second birefringent crystal; and
a third birefringent crystal between the non-reciprocal rotating means and the first birefringent crystal for directing the sub-beams to the output ports.

17. The device according to claim 12, wherein the optical switch is reciprocal, enabling light launched into the first or second output ports to exit either of the first or the second input ports.
